# EUROPEAN PATENT APPLICATION

(11) **EP 4 717 736 A1**
(43) Date of publication of application: **01.04.2026**
(21) Application number: 24203091.4
(22) Date of filing: 27.09.2024
(51) Int. Cl.: C09D 1/00

(54) **METHOD FOR MARKING AN OBJECT MADE FROM STEEL, METAL OR A NON-FERROUS METAL ALLOY, MARKED OBJECT OBTAINED THEREBY, AND USE OF AN AQUEOUS SLURRY OR POWDER COMPOSITION FOR MARKING AN OBJECT MADE FROM STEEL, METAL OR A NON-FERROUS METAL ALLOY**

(71) Applicant: Kocks Technik GmbH&Co. KG, 40721 Hilden (DE)
(72) Inventor: DEWALD, Oliver, 40721 Hilden (DE); KRUSE, Michael, 40721 Hilden (DE); JAVADI, Mehrdad, 52074 Aachen (DE); MÜHMER, Dirk, 52070 Aachen (DE)
(74) Representative: Hoffmann Eitle

(57) **Abstract**

Provided herein is a method for marking an object made from steel, metal or a non-ferrous metal alloy, the method comprising a step of applying a powder or an aqueous slurry to the object to provide for a marking, the powder or aqueous slurry comprising A an aluminium compound other than aluminium titanate and aluminium nitride, which preferably comprises one or more selected from the group consisting of aluminium oxides and aluminium hydroxides, and B particles of one or more selected from the group consisting of aluminium titanate, aluminium nitride, and oxides, hydroxides, carbides, nitrides, aluminates, and titanates of a metal or semi-metal other than aluminium, the use of such a powder or slurry for marking an object, and a marked object. The marking can be provided on objects made from e.g. steel or other metals or metal alloys, even at high temperatures, is durable, yet can be removed by a simple physical operation such as brushing or wiping without impairing the properties or dimensions of the marked object.

## Description

### INTRODUCTION

The need for providing a marking on an object arises in various technical fields and also in everyday life, e.g. for identifying an entity (product, material) or for highlighting a part of the entity's surface area. Such a marking may take any form, such as letters, words, numbers, symbols or indicia, codes (bar codes, QR codes), or even only a circle or spot.

There are various technical devices for providing a marking, ranging from hand-held devices such as brushes, pens, pencils, sharpies, chalk, crayons, spray cans, etc to automatic devices such as printers (laser, inkjet, etc) or automatic paint sprayers. The compositions used for providing the marking using such devices differ widely, from purely inorganic materials such as chalk to fully organic substances such as organic dyes. Frequently, also mixtures of such materials are employed in a composition for providing a marking. Such compositions can take various forms, such as solids, liquids (solutions) or dispersions (e.g. inks).

Frequently, the device and the composition are determined by the intended application, such as the surface of the object to be marked. For example, aqueous inks can be used on porous and absorbing materials such as paper, while they cannot be used to provide a lasting marking on non-porous and non-absorbing materials, such as steel or plastic surfaces. Also, certain devices imply certain limitations to the marking composition, such as viscosity, in case of e.g. inkjet printers and pens. For this reason, typically auxiliary agents other than colouring agents are used in such marking compositions in order to provide for the desired and/or necessary properties, such as adhesion to the object surface and other physical properties. Additional challenges arise due to the need to avoid a blurring of the marking by smearing or running of an ink, thereby affecting resolution and recognizability of e.g. a symbol, letter or code.

Developing a composition that is capable of providing a durable and recognizable marking on a given surface (such as non-porous and non-absorbing surfaces) is thus not trivial. Further, additional challenges arise if the marking shall not only be durable in the sense that it is maintained on the surface in a recognizable and preferably machine-readable manner, but also shall also be removable without causing visible changes, such as a colour change or abrasion, to the marked object, such as for intermittent product marking during manufacturing processes for internal purposes. This rules out the use of compositions that undergo a chemical reaction with the object's surface to be marked. Still further, for cost and safety reasons the removal preferably should not require the use of chemicals but can be effected by e.g. scratching or rubbing.

Additional challenges can arise from the conditions under which the marking is to be applied. It is readily recognisable that for instance the object temperature needs to be in a suitable range, as for example hot surfaces (e.g. 500 °C or higher) can lead to carbonisation and thermal decomposition of organic dyes or organic auxiliaries in a coating composition, thereby potentially impairing colour and recognizability of a marking. Also, removability without causing visible changes to the object may be impaired, as at such higher temperatures a reaction with the object's surface to be marked can easily occur. A high temperature of the object to be marked may also lead to evaporation of volatile organic substances in the marking composition, thereby potentially causing health hazards. At high temperatures, also a rapid evaporation of solvents can occur, which can lead to an impaired optical appearance of the marking.

The provision of a marking on a moving object can provide additional challenges, in particular if a recognizable marking shall be provided.

Such problems occur for example in rolling mills, such as steel rolling mills, where a marking is to be provided on an object that has been hot-rolled, such as a steel bar or rod. Here, it is generally not desired to stop the object to apply the marking, as this impairs productivity and interferes with the production process. Also, the surface on which the marking shall be applied also has a high temperature, often higher than 500 °C.

### PROBLEMS TO BE SOLVED BY THE PRESENT INVENTION

The present invention aims at solving one or more of the above problems by providing a method for marking an object, in particular an object made from steel, metal or a non-ferrous metal alloy, which allows achieving one, two or more of the following:
- The ability to provide a durable marking at a high temperature of the surface of the object on which the marking is to be provided;
- The ability to provide a marking that can removed from the marked object by a physical removal technique such as wiping or brushing;
- The ability to be implemented at the site of production without impairing productivity;
- The ability to provide for a marking that is recognizable, and in particular machine-readable;
- The ability to provide for different colours;
- The ability to provide a marking on a moving object;
- The ability to provide a marking without impairing the object's quality and properties, and without causing a reaction with or at the object's surface.
- The ability to avoid the need for volatile organic substances.
- The ability not to release any harmful substances onto the material surface or into the ambient air
- The ability to adjust the rheological properties in cases where there is a need to change the rheological properties.

### SUMMARY OF THE INVENTION

After extensive studies, the inventors have found that one or more of the above problems can be solved by the following:
1. A method for marking an object made from steel, metal or a non-ferrous metal alloy, the method comprising a step of applying a powder or an aqueous slurry to the object to provide for a marking, the powder or aqueous slurry comprising
   A an aluminium compound other than aluminium titanate and aluminium nitride, and
   B particles of one or more selected from the group consisting of aluminium titanate, aluminium nitride, and oxides, hydroxides, carbides, nitrides, aluminates, and titanates of a metal or semi-metal other than aluminium.
2. The method according to Embodiment 1, wherein the aluminium compound other than aluminium titanate and aluminium nitride comprises one or more selected from the group consisting of aluminium oxides and aluminium hydroxides, and/or wherein preferably the aluminium compound is present in the powder or in the aqueous slurry in the form of a sol-gel.
3. The method according to embodiment 1 or 2, wherein the particles of one or more selected from the group consisting of oxides, hydroxides, carbides, nitrides, aluminates, and titanates of a metal or semi-metal other than aluminium are selected from the group consisting of particles of one or more selected from the group consisting of oxides, hydroxides, carbides, nitrides, aluminates, and titanates of one or more selected from the group consisting of titanium, boron, nickel, chromium, magnesium, zinc, barium, silicon and zirconium.
4. The method according to any one of embodiments 1 to 3, wherein the step of applying the aqueous slurry or powder includes ejecting the slurry or powder from a device through one or more nozzles.
5. The method according to any one of embodiments 1 to 4, wherein the step of applying is performed while the object moves at a velocity of 0.1 to 120 m/s.
6. The method according to any one of embodiments 1 to 5, wherein at the time of applying the aqueous slurry or powder to the object, the object has a temperature of 20 to 1300 °C.
7. The method according to any one of embodiments 1 to 6, wherein the particles B have a particle diameter from 1 up to 500 µm, such as from 1 to 250 or 5 to 40 um.
8. The method according to any one of embodiments 1 to 7, wherein the aqueous slurry has a solid content of 20% by weight or more, preferably 30% by weight or more, such as 50% or more.
9. The method according to any one of embodiments 1 to 8, wherein the method further comprises, prior to the step of applying the aqueous slurry or powder, a step of identifying an object or marking point on an object on which the marking is to be provided.
10. The method according to embodiment 9, wherein the step of identifying an object on which the marking is to be provided includes a step of examining the object for defects and/or deviations from defined dimensions and/or for deviations from defined compositions.
11. The method according to any one of embodiments 1 to10, wherein the object is a steel bar or a bar made from a non-ferrous metal or metal alloy.
12. The method according to any one of embodiments 1 to 11, wherein the marking can be removed by a mechanical polishing or brushing operation.
13. The method according to any one of embodiments 1 to 12, wherein the marking is visible with the naked eye and/or wherein the marking has a regular or irregular shape or pattern.
14. Use of an aqueous slurry or powder comprising
   A an aluminium compound other than aluminium titanate and aluminium nitride, and
   B particles of one or more selected from the group consisting of aluminium titanate, aluminium nitride, and oxides, hydroxides, carbides, nitrides, aluminates, and titanates of a metal or semi-metal other than aluminium;
   for marking an object, in particular a steel bar or a bar made from a non-ferrous metal or metal alloy.
15. An object made from steel, metal or a non-ferrous metal alloy having a marking, which is obtainable by the method of any one of embodiments 1 to 13 or by the use of embodiment 14.

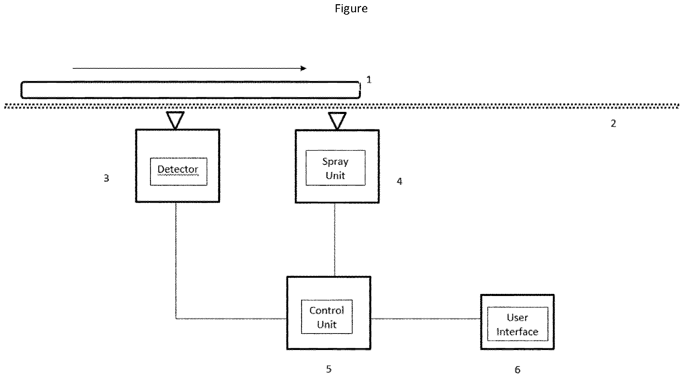

### BRIEF DESCRIPTION OF THE DRAWING

The Figure illustrates a possible implementation of the method of the present invention in e.g. a steel rolling mill. The reference signs are as follows:
1 Object from steel, metal or non-ferrous metal alloy
2 Conveyor
3 Detector
4 Spray Unit
5 Control Unit
6 User Interface

### DETAILLED DESCRIPTION OF THE INVENTION

The features and preferred features of the present invention will be described in the following. Herein the terms used should be given their ordinary meaning in the art unless indicated differently. Further, unless this is explicitly stated or obvious from the context, all physical parameters and properties relate to those at 20°C and 1 atm pressure in air atmosphere. The methods for determining certain parameters or properties are known to a skilled person and are not particularly limited, but also the methods indicated herein can be used. In case of discrepancy in the results, the methods indicated herein prevail.

The term "one or more" means one, or more than one, such as two or more, three or more, four or more, or five or more. The term "at least one" has the same meaning. The term "comprising" is used to denote that a composition of matter contains the respective material, yet the presence of additional components is not excluded. The term however also encompasses the meanings "consisting of" and "essentially consisting of", except where it is clear from the context that other components are required. Here, the term "essentially consisting of" generally means that other component(s) than those recited may be present in an amount of typically 10% by weight or less of the respective component, such as 5% by weight or less, such as 3% by weight or less.

When ranges are defined in the present invention by upper and lower limits, such as "from 2 to 5", the ranges include the indicated upper and lower limit and any value in between.

The term "marking" is used to denote a deposition of material on an object that allows recognition, typically by the naked eye, but additionally or alternatively by sensors. The sensors can be sensors detecting electromagnetic radiation of any wavelength, including visible light (wavelength 400 - 780 nm) and non-visible light such as UV (250-399 nm). The marking may have any shape or form, and can be in the form of lines, dots, symbols, numbers, letters, indicia, or codes, such as bar codes or QR codes. The markings can be white, grey, black or coloured. Different markings can have different colours, whereby different colours are defined as having peak emission wavelengths that are at least 20 nm apart.

The term "semi-metal" is in the context of the present invention used synonymously to the term "metalloid". Semi-metals in the sense of the present application thus also include metalloids, and specific examples include boron, silicon, antimony, tellurium and germanium, in particular boron and silicon.

The method of the present invention is a method for marking an object made from steel, metal or a non-ferrous metal alloy, the method comprising a step of applying a powder or an aqueous slurry to the object to provide for a marking, the powder or aqueous slurry comprising
A an aluminium compound other than aluminium titanate and aluminium nitride,
B particles of one or more selected from the group consisting of aluminium titanate, aluminium nitride, and oxides, hydroxides, carbides, nitrides, aluminates, and titanates of a metal or semi-metal other than aluminium.

An object denotes any entity made from steel, a non-ferrous metal or a non-ferrous metal alloy. Here, the term "made of" denotes that the entity consists essentially of, or consists of steel, metal or a non-ferrous metal alloy.

In the present invention, the term "steel" is meant to denote all metallic alloys whose main component is iron and which have a carbon content of equal to or less than 2.06% by weight. Here, the term "main component" is understood as relating to the metallic element that has the largest proportion of all metals of the alloy, typically 50% by weight or more. The term "steel" encompasses, depending on the alloying elements and the carbon content, unalloyed steel with a carbon content < 0.2 % by weight, low-alloy steel with a carbon content of > 0.2 % by weight and alloying elements below 5 % by weight, and high-alloy steel with alloying elements above 5 % by weight. Specific embodiments covered by the term "steel" encompass carbon steels, alloy steels, stainless steels, tool steels, high speed steels, heat resistant steels, low alloy steels, maraging steels, weathering steels, and springs steels. The term also encompasses any steel that is listed as an AISI/SAE or DIN grade, such as 316L (AISI/SAE) or C15 (DIN), or in other references, such as "Handbook of Comparative World Steel Standards" by J. E. Bringas (Ed.)., 5th Edition 2016.

Embodiments of metals forming the object on which the marking is to be provided include iron, aluminium, copper, chromium, nickel, brass, titanium, and lead.

The term non-ferrous metal or non-ferrous metal alloy encompasses any metals other than iron and alloys that do not contain iron as main component as defined above. Such an alloy typically consists of only metal, and typical examples include aluminium alloys, chromium alloys, copper alloys, zing alloys, nickel alloys and titanium alloy. Here, an alloy is defined as containing at least 50% by weight of the respective metal, the remainder being formed by other metals. For example, a copper alloy contains at least 50% by weight of copper, the remainder being formed by other metals capable of forming an alloy with copper.

The shape and form of the object is not particularly limited. While the object may be spherical, it is typically non-spherical and has a length, height and width. Here, the length denotes the longest axis of the object, and height and width denote the dimensions of the object in the two directions forming the plane perpendicular to the length. Height and width of the object may be different or identical and are both shorter than the longest axis. A preferred example of an object having a length and identical height and width is a steel, metal or non-ferrous alloy rod having a length of e.g. 1 to 100 m and a circular cross-section perpendicular to the length having a diameter of less than 1m, e.g. from 4.5 to 30 mm or from 10 to 200 mm, such as from 50 to 180 mm, and this includes bar-in-coils (BIC). The length may be 100 m or less, such as 12, 10, or 8 m or less. However, the length is not particularly limited, and the cross-sections above may also be applicable to longer objects having a length of several thousand meters, such as 5000 m or less, in case of wires.

Another example of an object having a length and identical height and width is a steel, metal or non-ferrous alloy rod having a length of e.g. 1 to 4000 m, such as 1 to 100 m or 1 to 12, 1 to 10 or 1 to 8 m, and a square cross-section perpendicular to the length having a side length of less than 1 m, e.g. from 5 to 500 mm, such as from 10 to 200 mm. Another example of an object having a length and different height and width is a steel, metal or non-ferrous alloy rod having a length of e.g. 1 to 4000 m and a rectangular cross-section perpendicular to the length having different side lengths of each less than 1 m, e.g. from 5 to 500 mm. Where the object's cross-section perpendicular to the length is neither circular nor square/rectangular but more complex, it may be in U or T shape, or in any other form that is typically obtained in a rolling mill. The object may also take the form of a coil wherein a strand of a steel, metal or a non-ferrous metal alloy material is spirally wound, the strand typically having a diameter between 5 and 50 mm.

In order to provide a marking, the method comprises a step of applying a powder or an aqueous slurry to the object. The area (surface) to which the powder or aqueous slurry is applied in order to provide the marking is formed by steel, metal or non-ferrous metal alloy. The marking typically does not change the dimensions of the marked object and is typically completely removable by a mechanical operation such as wiping with a cloth or brushing.

In the present invention, a powder is defined as a solid material consisting of particles having an average diameter (average particle diameter D₅₀, volume-based, determined by a laser light scattering method) of 1,000 µm or less. Preferably, the average diameter is 500 µm or less, 300 µm or less, more preferably 100 µm or less, such as 50 µm or less or 40 µm or less. The lower limit is not particularly limited, but is typically 0.1 µm, such as 1 µm or more.

An aqueous slurry denotes a suspension of solids in a liquid phase that contains water. The water content of the liquid phase is typically 50% by weight or more, such as 75% by weight or more of 80% by weight or more, such as 85% by weight or more, 90 % by weight or more, 95% by weight or more, relative to the total weight of the liquid phase. While the liquid phase may also be formed by 100% of water (i.e. consists of water), other components may be present in order to adjust rheological properties such as viscosity, surface tension and stability. The components are preferably formed by those having a boiling point of 200°C or less, such as 150°C or less, as these evaporate quickly upon contact with a hot object surface. Examples of such other components include fully water-miscible solvents, such as methanol, ethanol, ethylene glycol or polyethylene glycol (PEG), surfactants, in particular non-ionic surfactants, such as ethoxylated fatty alcohols, polyoxyethylene sorbitan fatty acid esters, and alkyl polyethylene glycols, or rheology modifies, such as alkyl and hydroxyalkyl celluloses.

While minor amounts of organic materials may be present, the powder or aqueous slurry is preferably 100% inorganic. This means that the powder or aqueous slurry is free of components containing a carbon-hydrogen bond.

The powder or aqueous slurry comprises as component A an aluminium compound other than aluminium titanate and aluminium nitride, which is preferably selected from the group consisting of aluminium oxides aluminium hydroxides, and as component B particles of one or more selected from the group consisting of aluminium titanate, aluminium nitride, and oxides, hydroxides, carbides, nitrides, aluminates, and titanates of a metal or semi-metal other than aluminium.

The reason why the components A and B are included is as follows:

As described above, the use of conventional marking materials such as inks and organic matter is associated with many drawbacks, and these are unable to provide a durable yet easily removable marking on a non-porous metal, steel or alloy surface, in particular at higher temperatures. In the search for a suitable material, the present inventors developed the idea of using an inorganic material, in particular an aluminium compound, as a marking material. Since aluminium compounds such as aluminium oxide and aluminium hydroxide are not very reactive and thermally stable, it was contemplated that these materials may form a marking without reacting with the object's surface even at higher temperatures, such as up to 1300°C. Thus, these materials may be capable of also being easily removable.

However, while initial tests revealed that this assumption was correct, it was found that a marking obtained from a powder of an aluminium compound, such as for example an aluminium oxide and/or aluminium hydroxide, or a slurry containing an aluminium compound, such as for example an aluminium oxide and/or aluminium hydroxide, shows high transparency. While thus a marking could be provided on an object having a high temperature and this marking could also be easily removed by a manual operation without causing a change to the underlying object, the marking was not easily recognizable by the naked eye, which is not ideal for easy handling and identification by workers in a production facility such as in a rolling mill.

Faced with this result, the present inventors searched for options as to how the recognisability of the marking could be improved while maintaining the properties of easy removability and non-interference with the underlying object, and developed the idea of adding an additional component as "colouring agent". This material may not itself have to show adhesion and easy removability when applied to an object surface at high temperature when it is embedded in a matrix formed from the aluminium compound (A).

It was further considered that this colouring material should exhibit little or no reactivity with the metal object surface even at a high temperature. It was found that the desired effect of providing a more visible marking could be achieved by mixing (A) the aluminium compound other than aluminium titanate and aluminium nitride with (B) particles of one or more selected from the group consisting of (B1) aluminium titanate, (B2) aluminium nitride, and (B3) oxides, hydroxides, carbides, nitrides, aluminates, and titanates of a metal or semi-metal other than aluminium. Here, the aluminium compound (A) is not particularly limited, but is preferably one or more selected from the group consisting of the aluminium hydroxides and the aluminium oxides.

The relative amounts of the components (A) and (B) are thus not particularly limited and can be appropriately selected by a skilled person. In order to achieve this, however, in one embodiment the weight ratio of the components (A):(B) may be from 19:1 to 1:19, preferably from 9:1 to 1:9, more preferably from 1:1 to 1:5, still further preferably from 1:1 to 1:3. Within these ranges, typically the desired balance of properties can be obtained.

The aluminium compound (A) other than aluminium titanate and aluminium nitride is preferably present in forms that allow for high porosity or that lead to the formation of a network structure when applied to an object (in particular at higher temperatures), thereby providing an anchoring matrix for the "colouring" particles (B). Thus, the aluminium compound may have a specific surface area (using BET analytical technique, determined by nitrogen adsorption at 77 K using a suitable device, such as a Beckmann Coulter surface analyzer SA 3100, after degassing at 120°C for 2 hours at 1 mbar or lower) of 10 m²/g or more, preferably 20 m²/g or more, more preferably 50 m²/g or more, 75 m²/g or more or 100 m²/g or more, and typically 600 m²/g or less, such as 500 m²/g or less, 400 m²/g or less, or 300 m²/g or less. These specific surface areas apply to all aluminium compounds (A), including the embodiment wherein the aluminium compound (A) is one or more selected from the group consisting of aluminium oxides and/or aluminium hydroxides.

The aluminium compound (A) other than aluminium titanate and aluminium nitride may preferably be present in the aqueous slurry or powder in the form of a sol-gel material. Such a sol-gel material may comprise a species wherein the aluminium compound is present only as oxide or hydroxide, but also in both (i.e., mixed) oxide and hydroxide form. Incidentally, a material wherein the aluminium compound is present in both oxide and hydroxide form may not only be used in sol-gel form, but also other forms.

Examples of oxide and hydroxide forms of aluminium include Al(OH)₃ and Al₂O₃, Further, the aluminium oxide and/or hydroxide is preferably in amorphous form, but crystalline or partly crystalline (i.e. mixed crystalline/amorphous) materials are also within the scope of the present invention. This includes α-alumina, β-alumina and γ-alumina, of which γ-alumina is preferred.

In the case of application of an aqueous slurry for forming the marking, it is also possible that an aluminium compound (A) other than aluminium titanate and aluminium nitride in oxide and/or hydroxide form is formed shortly before application *in situ,* e.g. in the application device (spray unit) or an upstream container or device, preferably as a sol-gel material, typically followed by heating or evaporation before or after its application onto the object to be marked. In the alternative, it is also possible that the aluminium compound in oxide and/or hydroxide form is formed not before but at or after the time of forming the marking, e.g., after its application onto the object to be marked. In both instances, the aluminium compound that is one or more selected from the groups consisting of aluminium oxides and hydroxides may be formed from precursor materials, e.g. aluminium alkoxides represented by Al(OR)₃ wherein R is a straight or branched alkyl group having 1 to 6 carbon atoms, such as Al(OCH₃)₃, Al(OC₂H₅)₃, Al(OC₃H₇)₃, Al(OC₄H₉)₃, or Al[OCH(CH₃)₂]₃, or other precursor compounds such as AlCl₃ by hydrolysis with water and a subsequent polycondensation reaction leading to a three-dimensional network. The resulting product is known as a sol-gel material. Such a sol-gel material may also be formed in advance and provided to the application device (spray unit), separately or in admixture with the particles (B).

It is also possible that the powder or aqueous slurry comprises as component (A) an aluminium salt, e.g. AlCl₃ Al₂(SO₄)₃ or Al(NO₃)₃. In this case, the aqueous slurry or powder preferably further includes a compound that reacts with said aluminium compound or aluminium salt to form an aluminium oxide or hydroxide after application to the object to be marked.

The particles (B) of one or more selected from the group consisting of aluminium titanate, aluminium nitride, and oxides, hydroxides, carbides, nitrides, aluminates, and titanates of a metal or semi-metal other than aluminium are not specifically limited.

Examples of nitrides include the nitrides of metals and non-metals, such as the nitrides of lithium (Li), aluminium (Al), magnesium (Mg), aluminum (Al), silicon (Si), boron (B), phosphorous (P), Carbon (C), Germanium (Ge), Gallium (Ga), titanium (Ti), zirconium (Zr), vanadium (V), boron (B), chromium (Cr), manganese (Mn), iron (Fe), nickel (Ni), copper (Cu), zinc (Zn), niobium (Nb), molybdenum (Mo), tantalum (Ta), and tungsten (W). The nitrides are preferably selected from those that do not react with water to from ammonia (NH₃), so that the nitrides are preferably not nitrides of the alkali metals or earth alkaline metals.

Examples of oxides and hydroxides include the oxides and hydroxides of alkali metals (in particular sodium and potassium), earth alkaline metals (in particular calcium , magnesium, strontium and barium), oxides and hydroxides of transitions metals, such as scandium (Sc), titanium (Ti), vanadium (V), manganese (Mn), iron (Fe), nickel (Ni), copper (Cu), zinc (Zn), yttrium (Y), zirconium (Zr), niobium (Nb), molybdenum (Mo), technetium (Tc), ruthenium (Ru), rhodium (Rh), palladium (Pd), silver (Ag), cadmium (Cd), hafnium (Hf), tantalum (Ta), tungsten (W), rhenium (Re), osmium (Os), tin (Sn), thallium (TI), lead (Pb), and bismuth (Bi).

Examples of aluminates include the aluminates of sodium, potassium, calcium, and various transition metals such as titanium, vanadium, manganese, iron, cobalt, nickel, copper, zinc, yttrium, zirconium, niobium, molybdenum, cadmium and osmium. Preferred examples include the aluminates of iron, titanium, nickel, and copper.

Examples of titanates include the titanates of sodium, potassium, boron, aluminium, magnesium (Mg₂AlO₄) lithium, calcium, strontium, barium, iron, cobalt, nickel, copper, zinc, lead, niobium, tantalum, bismuth, Cerium, zirconium, vanadium and yttrium. Of these the titanates of the alkali metals, earth alkaline metals, aluminium and boron are preferred, as they are available at relatively low costs.

Examples of the carbides include the carbides of the metals, such as the transition metals, in particular those in groups 4 (Ti, Zr, Hf), 5 (V, Nb, Ta), and 6 (Cr, Mo, W) of the periodic table of the elements, as well as silicon carbide (SiC) and boron carbide (B₄C).

The carbides are preferably not ionic carbides, i.e. are not carbides of the alkali metals, earth alkaline metals, and aluminium, as these may react with water and/or moisture to form methane or hydrogen, acetylene, hydrogen or other combustible and/or explosive gases.

In one embodiment, the particles (B) may be selected from particles of an oxide, hydroxide, aluminate, carbide, titanate or nitride of one or more selected from the group consisting of titanium, boron, nickel, magnesium, zinc, barium, silicon and zirconium. With these materials, good results have been obtained, and reactivity with the underlying object surface has not been observed. Specific examples include boron nitride (BN), silicon nitride, aluminium titanate (Al₂TiO₅), zirconium oxide (ZrO₂) that may be stabilized with yttria (YSZ), titanium dioxide, magnesium dioxide, zinc oxide, silicon oxide, barium titatate, and boron titanate.

The particles (B) can be freely selected among the above. In one embodiment, the particles (B) do not contain chromium or cobalt, as such materials may pose unnecessary health and safety risks.

The particles (B) are not specifically limited, but typically have a particle diameter (again expressed as D₅₀ in a volume-based distribution determined by e.g. laser light scattering) of 1 - 100 µm, such as from 1 to 40 um. Within these particle ranges, a suitable incorporation into the marking can be achieved. Too small particles can lead to problems such as static charges, while too coarse particles may cause line plugging and poor incorporation into the composition forming the marking.

In the case of a powder, the powder may comprise the components A and B in such amounts that the total amount of the components A and B (A+B) form 50% by weight or more of the powder, such as 60% by weight or more, 70% by weight or more, 80% by weight or more, or 90 % by weight or more, e.g. 95% by weight or more, while the powder also may consist of the components A and B (the total amount of the components A and B is 100% by weight of the powder).

In the case of an aqueous slurry, the solid components of the aqueous slurry may comprise the components A and B such that the total amount of the components A and B (A+B) form 50% by weight or more of the solid components of the aqueous slurry, such as 60% by weight or more, 70% by weight or more, 80% by weight or more, or 90 % by weight or more, e.g. 95% by weight or more of the solid components of the aqueous slurry, while the solid components of the aqueous slurry also may consist of the components A and B (the total amount of the components A and B is 100% by weight of the solid components of the aqueous slurry).

Next, an embodiment of the method of the present invention as can be implemented in e.g. a rolling mill will be explained with reference to the figure.

In the method of the present invention, an object 1 to be marked is made from steel, metal or a non-ferrous metal alloy and may be static, or may move along a certain direction (indicated by the arrow in the figure) during the application of the powder or aqueous slurry. Typically, the object 1 is present on a conveyor.

In the embodiment shown in the figure, the object 1 is evaluated as to possible defects by a Detector 3 that is connected with a Control Unit 5. The system including the Detector 3 and the Control Unit 5 can e.g. be a 4D EAGLE S system developed by KOCKS, which may e.g. employ laser light for examining the entire length or the entire surface of the objects for rolling and/or other defects like laps, scratches, spills, seams, grooves or shells. Hereby, also the defect position on the object 1 may be determined. The determination may e.g. be based on a spectroscopic method, but also other suitable methods can be used.

The detector information is processed in a Control Unit 5. Depending on the stored settings, the Control Unit 5 operates the Spray Unit 4 at a suitable time when the object 1 passes the Spray Unit 4. The Control Unit 5 may also communicate with the Conveyor 2 and may access information relating to the speed of the object 1 along the direction indicated by the arrow to determine the appropriate time for operating the Spray Unit 4 such as to provide the marking on the object 1 on which the defect has been detected, optionally at a position close to the defect. The Control Unit 5 may also be connected to the Conveyor 2, e.g. in order to lower the speed of the Conveyor 2. The Conveyor 2 may e.g. be part of a cooling bed in a rolling mill.

A user interface (such as a keyboard or touchpad) may be connected to the Control Unit 5. With this user interface, the parameters for the detector and the decision as to when providing a marking may be set and modified. The user interface may also be used to operate the Spray Unit 4 independently of the results of the detector, e.g. in order to indicate a change in batch of material or to provide other information, such as customer, material grade, batch number, order number, or trimming length.

In the embodiment illustrated in the figure but also in all other embodiments, the temperature of the object at the time of application of the powder or aqueous slurry is not limited, and may e.g. be from 20 - 1,300°C. It is one key advantage of the present invention that also the application to hot (i.e., temperature higher than 150°C, such as 300°C or 400°C) objects is possible, as thereby an impairment of productivity as would otherwise be caused by a cooling-off time in a rolling mill can be avoided.

Further, in the embodiment illustrated in the figure but also in all other embodiments, the device from which the powder or the aqueous slurry is applied (the Spray Unit 4 in the figure) may take any form, yet typically comprises one or more nozzles from which the powder or the aqueous slurry is ejected. The ejection may be caused by any means, e.g. by pressurising the composition using a pump or by using compressed gas (such as compressed air or nitrogen). Here, the compressed gas may be used to transport the materials to the one or more nozzles but may additionally or alternatively be side-fed to the one or more nozzles to atomize the components, thereby forming a spray jet or mist.

The application device typically contains one or more nozzles from which the powder or the aqueous slurry is ejected. The one or more nozzles may be arranged on one side of the object, typically along its path of movement, but also may be provided on various sides of the object, e.g. such as to surround the object such as a steel bar. This allows providing the marking on all or several sides of the object, thereby facilitating easy recognition of the marked object.

In the embodiment illustrated in the figure but also in all other embodiments, the object may move relative to the application device (e.g. the Spray Unit 4) at the time of application of the powder or aqueous slurry. The object may move at a velocity of from 0.1 to 120 m/s., typically 0.2 to 20 m/s. This allows an in-line arrangement in e.g. a rolling mill where the objects on which the marking is to be provided may move at considerable speed.

As will be readily apparent to a skilled reader, the device from which of the aqueous slurry or the powder is applied (e.g. the Spray Unit 4) may contain, or may be connected to, a container used for storing and/or preparing the aqueous slurry or the powder. Here, the container may be equipped with a stirrer or other homogenizer. The container may contain the aqueous slurry or powder containing both the aluminium compound, e.g. the aluminium oxide and/or hydroxide or a precursor material thereof, (A) and the particles (B), or these may be stored and held in different containers and be fed separately to the application device (e.g. the Spray Unit 4). In the latter case, there may be provided a mixing chamber for mixing the components prior to ejection. The latter design may have the advantage that also precursor materials may be used, such as aluminium alkoxides, which may be easier to handle and/or to store. For example, it could be contemplated to feed (i) the particles (B), (ii) an aluminium alkoxide or solution thereof, and (iii) water separately to a mixing chamber, where in the mixing chamber the aluminium alkoxide and water react to form an aqueous aluminium hydroxide and/or oxide as aluminium compound (A), and to then feed the formed slurry to the one or more spray nozzles.

The present invention thereby provides an object as defined above on which the marking is provided. Here, the marking may take any desired form or shape, and in its most simple realisation is merely a dot or line. However, also more complex shapes such as letters, numbers, indicia, bar codes or QR codes can be provided. These more complex shapes can be used to confer additional information, such as customer, production date, batch type, material composition, type of defect detected, further processing of the object, etc. Such additional information however cannot only be conferred by different shapes of the marking, but also by different compositions (e.g. different colours) of the markings, typically by use of different particles (B). In the latter case, it would of course also be possible to use more than one device for ejecting different compositions, or using more than one composition in the same device. In the latter case, the information may also be conferred by a mixing ratio of different compositions, e.g. containing different particles (B).

It has been found that such a marking is sufficiently durable for e.g. identification of a faulty product at a manufacturing site, yet that such a marking can also be readily removed by a simple operation such as wiping, grinding or buffing without impairing the object's composition and properties. Further, it is contemplated that the marking material thereby removed could be recycled to the process for providing fresh markings on other objects in the method of the present invention.

The marking may thus be used for various purposes. In one embodiment, the marking it can be used in a production site in order to eliminate faulty products from the downstream production processes. This may be done by members of staff by visual inspection but may also be implemented by automatic sorting means relying on the marking for identifying faulty respectively non-faulty products. In the latter case, the marking may be identified by optical sensors operating in the visible or other wavelength ranges, yet of course also spectroscopic or other techniques suitable for identifying the presence respectively absence of a marking can be adopted.

The present invention also covers the use of an aqueous slurry or powder comprising the aluminium compound (A) and the particles (B) for marking an object, in particular a steel bar or a rod made from a non-ferrous metal or metal alloy. Herein, the description of the method above applies analogously, and a detailed description thereof is omitted.

### EXAMPLES

The present invention is described further by way of examples, yet these examples do not limit the scope of the invention in any way.

The inventors prepared more than 20 different compositions as aqueous slurries relying on an aluminium containing sol-gel material as component (A) and various particles (B). The particles B included titanium dioxide, boron nitride, aluminium titanate, and yttrium-stabilized zirconia, which were used individually or in a mixture. Here, the relative amounts of the sol-gel (A) and the particles (B) were varied such as to achieve various ratios B:A that allowed obtaining a marking that was visible with the naked eye. The proportion of water in the aqueous slurry was between 25 and 70 %.

The compositions were applied to steel objects (steel rods) during the production process of a rolling mill at object temperatures of 970 - 1,050°C, ejecting the compositions using compressed air and for atomizing at a pressure of 3 - 6 bars. In each instance a marking that was clearly recognisable with the unaided eye was successfully formed. The marking again could be removed by brushing, yet adhesion was enough to avoid falling-off during subsequent operation of the rolling mill.

As a comparative example, a marking was formed under the same conditions using the aluminium containing sol-gel only, not including any particles B. A transparent material was formed that due to its transparency was not readily conceivable as a marking with the unaided eye.

## Claims

1. A method for marking an object made from steel, metal or a non-ferrous metal alloy, the method comprising a step of applying a powder or an aqueous slurry to the object to provide for a marking, the powder or aqueous slurry comprising
A an aluminium compound other than aluminium titanate and aluminium nitride, and
B particles of one or more selected from the group consisting of aluminium titanate, aluminium nitride, and oxides, hydroxides, carbides, nitrides, aluminates, and titanates of a metal or semi-metal other than aluminium.

2. The method according to Claim 1, wherein the aluminium compound (A) comprises one or more selected from the group consisting of aluminium oxides and aluminium hydroxides, and/or wherein preferably the aluminium compound is present in the powder or the aqueous slurry in the form of a sol-gel.

3. The method according to claim 1 or 2, wherein the particles of one or more selected from the group consisting of oxides, hydroxides, carbides, nitrides, aluminates, and titanates of a metal or semi-metal other than aluminium are selected from the group consisting of particles of one or more selected from the group consisting of oxides, hydroxides, carbides, nitrides, aluminates, and titanates of one or more selected from the group consisting of titanium, boron, nickel, chromium, magnesium, zinc, barium, silicon and zirconium.

4. The method according to any one of claims 1 to 3, wherein the step of applying the aqueous slurry or powder includes ejecting the slurry or powder from a device through one or more nozzles.

5. The method according to any one of claims 1 to 4, wherein the step of applying is performed while the object moves at a velocity of 0.1 to 120 m/s.

6. The method according to any one of claims 1 to 5, wherein at the time of applying the aqueous slurry or powder to the object, the object has a temperature of 20 to 1,300 °C.

7. The method according to any one of claims 1 to 6, wherein the particles B have a particle diameter from 1 up to 500 µm, such as from 1 to 250 or 5 to 40 um.

8. The method according to any one of claims 1 to 7, wherein the aqueous slurry has a solid content of 20% by weight or more, preferably 30% by weight or more, such as 50% or more.

9. The method according to any one of claims 1 to 8, wherein the method further comprises, prior to the step of applying the aqueous slurry or powder, a step of identifying an object or marking point on an object on which the marking is to be provided.

10. The method according to claim 9, wherein the step of identifying an object on which the marking is to be provided includes a step of examining the object for defects and/or deviations from defined dimensions and/or for deviations from defined compositions.

11. The method according to any one of claims 1 to10, wherein the object is a steel bar or a bar made from a non-ferrous metal or metal alloy.

12. The method according to any one of claims 1 to 11, wherein the marking can be removed by a mechanical polishing or brushing operation.

13. The method according to any one of claims 1 to 12, wherein the marking is visible with the naked eye and/or wherein the marking has a regular or irregular shape or pattern.

14. Use of an aqueous slurry or powder comprising
A an aluminium compound other than aluminium titanate and aluminium nitride; and
B particles of one or more selected from the group consisting of aluminium titanate, aluminium nitride, and oxides, hydroxides, carbides, nitrides, aluminates, and titanates of a metal or semi-metal other than aluminium;
for marking an object, in particular a steel bar or a bar made from a non-ferrous metal or metal alloy.

15. An object made from steel, metal or a non-ferrous metal alloy having a marking, which is obtainable by the method of any one of claims 1 to 13 or by the use of claim 14.
